# FASCICULE DE BREVET EUROPEEN

(11) **EP 2 091 805 B1**
(45) Date de publication et mention de la délivrance du brevet: **08.06.2011**
(21) Numéro de dépôt: 07822630.5
(22) Date de dépôt: 15.11.2007
(51) Int. Cl.: B62D 25/04

(54) **STRUCTURE DE PIED MILIEU POUR VEHICULE AUTOMOBILE**
MITTELSÄULENSTRUKTUR FÜR KRAFTFAHRZEUG
CENTRAL PILLAR STRUCTURE FOR AUTOMOTIVE VEHICLE

(30) Priorité: 22.11.2006 FR 0610223
(43) Date de publication de la demande: 26.08.2009
(73) Titulaire: Renault s.a.s., 92100 Boulogne Billancourt (FR)
(72) Inventeur: CARVALHO, HELENE, 75015 Paris (FR); PAVAUT, THIERRY, 75018 Paris (FR)
(74) Mandataire: Religieux, Vincent
(86) Numéro de dépôt international: PCT/EP2007/062388
(87) Numéro de publication internationale: WO 2008/061931

(56) Documents cités:
- EP-A1- 1 234 750
- WO-A-2005/037630
- FR-A1- 2 800 699

## Description

L'invention concerne une structure de pied milieu de véhicule automobile. Elle concerne également un véhicule automobile équipé d'une telle structure de pied milieu.

Le pied milieu fait partie de l'ossature de flanc de la carrosserie d'un véhicule automobile. Il définit avec une première poutre, appelée brancard de pavillon, une deuxième poutre de châssis et un pied avant, une ouverture avant dans la structure du véhicule permettant l'accès à bord, cette ouverture pouvant être fermée par une porte latérale avant. Il définit également, sur un véhicule à quatre ou cinq portes, avec le brancard de pavillon, la poutre de châssis et un renfort de custode, une ouverture arrière dans la structure du véhicule permettant l'accès à bord, cette ouverture pouvant être fermée par une porte latérale arrière.

Le pied milieu est constitué par un corps relié, à ses deux extrémités, au brancard de pavillon et à une poutre de châssis. Sur ce corps sont habituellement rapportés des moyens de fermeture et verrouillage de la porte latérale avant et des charnières d'articulation de la porte latérale arrière.

Le pied milieu est habituellement réalisé à partir de plusieurs éléments assemblés entre eux par soudure ou rivetage. Chaque élément peut être, par exemple, obtenu par emboutissage-de tôles d'acier. Le pied milieu comprend en général deux éléments principaux : un renfort de pied milieu donnant vers l'extérieur de la structure du véhicule et une doublure de pied milieu donnant vers l'intérieur de la structure du véhicule.

Compte tenu de la localisation du pied milieu dans la structure du véhicule (entre les deux grandes ouvertures avant et arrière), on comprend que celui-ci à un rôle crucial pour l'obtention de bonnes caractéristiques de rigidité et de sécurité du véhicule. On comprend notamment que la définition des caractéristiques du pied milieu est déterminante en ce qui concerne l'absorption d'énergie et la déformation de la structure en cas de choc latéral.

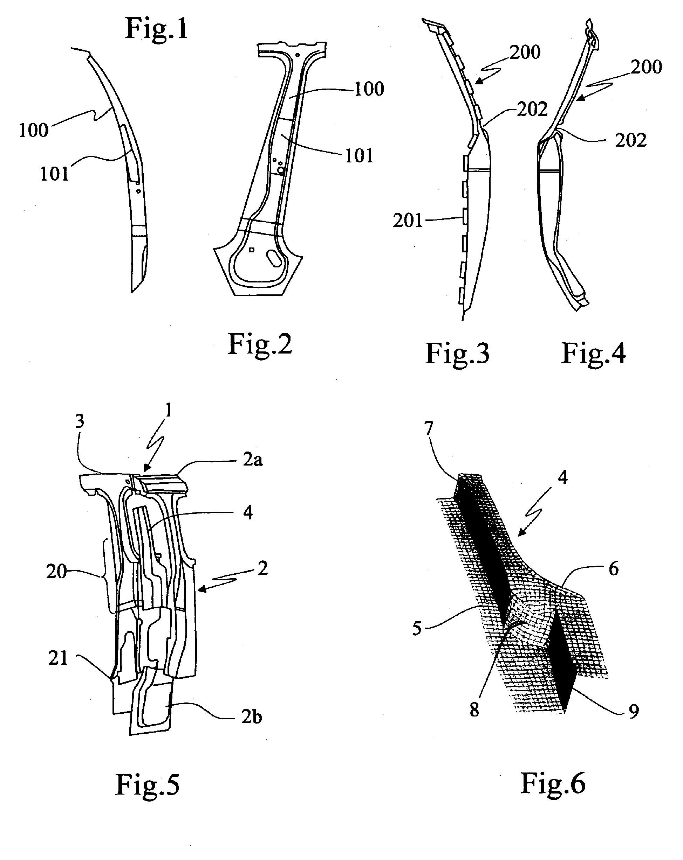

Ce problème est encore plus important sur les véhicules dont la structure est du type à porte sans cadre. En effet, sur ces véhicules, comme on peut le voir sur la figure 3, le pied milieu 200 passe d'une épaisseur importante dans sa partie inférieure à une faible épaisseur dans sa partie supérieure avec un changement de position de la feuillure 201 (représentée par le trait pointillé) entre ces parties. Ceci a pour conséquence de créer, dans une zone centrale 202, une brusque variation du moment d'inertie du pied milieu. Lors d'un choc latéral, le pied milieu est soumis à des contraintes de flexion. En conséquence, sous l'effet de ces contraintes, le pied milieu ruine dans cette zone centrale 202, comme on peut le voir sur la figure 4. Ceci a pour conséquence une déformation importante de la structure du véhicule et donc une intrusion importante du pied milieu déformé dans l'habitacle. Ces observations posent un problème important de sécurité des occupants de l'habitacle du véhicule.

Afin de remédier à ce problème, il est actuellement proposé de concevoir des pieds milieux dont les moments d'inertie évoluent de manière progressive le long de ceux-ci, c'est-à-dire sans discontinuité.

Il est également connu de munir le pied milieu d'une pièce de renforcement en son milieu.

Ainsi, comme représenté aux figures 1 et 2, il est connu de disposer au milieu du renfort de pied milieu 100, une pièce de renforcement 101 appelée « renfort choc de pied milieu ». Cette pièce est constituée d'une simple tôle fixée sur le pied milieu afin d'augmenter localement l'épaisseur de celui-ci et, par conséquent, son moment d'inertie et sa résistance.

On connaît, de la publication DE 199 10 979, un véhicule dont la structure comprend des pieds milieux renforcés. Ces pieds milieux sont constitués de tôles d'acier définissant un corps creux et sont en outre munis en leurs milieux de profilés creux réalisés en alliage léger.

On connaît, de la publication WO2005/037630, une structure de pied milieu de véhicule automobile compacte et résistante, selon les caractéristiques du préambule de la revendication principale 1.

On connaît, de la publication EP1234750, une structure comprenant un élément de carrosserie encadrant deux ouvrants et des moyens de rigidification de l'élément de carrosserie.

On connaît également, de la publication FR2800699, un pied milieu de carrosserie automobile comprenant un renfort de milieu et un renfort choc de pied milieu.

Le but de l'invention est de fournir une structure de pied milieu obviant aux inconvénients cités précédemment et améliorant les structures de pied milieu connues de l'art antérieur. En particulier, l'invention propose une structure de pied milieu renforcée en son milieu de manière à éviter sa ruine à cet endroit lors d'un choc latéral afin de limiter sa déformation et son intrusion dans l'habitacle.

La structure de pied milieu selon l'invention comprend :
- un renfort de pied milieu et une doublure assemblés l'un à l'autre et
- un renfort choc de pied milieu.

Elle est caractérisée en ce que le renfort choc de pied milieu comprend une première feuillure assemblée au renfort de pied milieu et une aile s'étendant au moins sensiblement perpendiculairement au renfort de pied milieu et longitudinalement par rapport à la structure de pied milieu et reliant la première feuillure à une deuxième feuillure au moins sensiblement parallèle à la première, en ce que l'aile du renfort choc de pied milieu comprend deux surfaces planes au moins sensiblement parallèles raccordées par une surface de raccordement.

La deuxième feuillure peut être séparée de la doublure par un jeu, tel qu'il est rattrapé par déformation de la structure sous l'effet d'un choc latéral.

La deuxième feuillure peut être séparée de la doublure par un jeu inférieur à 4 mm.

Le renfort choc de pied milieu peut être réalisé par emboutissage d'un flanc de tôle en acier. L'acier peut être du type à Très Très Haute Limite Elastique.

Le véhicule automobile selon l'invention est caractérisé en ce qu'il comprend une structure de pied milieu définie précédemment.

Le dessin annexé représente, à titre d'exemple, un mode de réalisation d'une structure de pied milieu selon l'invention.
La figure 1 est une vue de face d'une structure de pied milieu connu de l'art antérieur.
La figure 2 est une vue de côté d'une structure de pied milieu connu de l'art antérieur.
La figure 3 est une vue de face d'une structure de pied milieu pour véhicule à porte sans cadre, cette structure n'étant pas renforcée et étant connue de l'art antérieur.
La figure 4 est une vue de face de la structure de la figure 3, celle-ci ayant été déformée par un choc latéral.
La figure 5 est une vue en perspective éclatée d'une structure de pied milieu selon l'invention.
La figure 6 est une vue en perspective d'un renfort choc de pied milieu selon l'invention.
La figure 7 est une vue en perspective d'un renfort choc de pied milieu assemblé à un renfort de pied milieu.
La figure 8 est une section transversale selon le plan VII-VII de la figure 7 d'une structure de pied milieu selon l'invention, après que la doublure a été assemblée au renfort de pied milieu.
La figure 9 est une vue partielle d'une doublure de pied milieu selon l'invention.
La figure 10 est une vue de face d'une structure de pied milieu selon l'invention, cette structure ayant été déformée par un choc latéral.

La structure de pied milieu 1 représentée à la figure 5 comprend principalement un renfort de pied milieu 2, une doublure 3 et un renfort choc de pied milieu 4.

Le renfort de pied milieu est réalisé par emboutissage d'une tôle d'acier. Cette tôle a par exemple une épaisseur de l'ordre de 1,5 mm. Il peut être réalisé en une partie supérieure 2a et une partie inférieure 2b qui sont assemblées l'une à l'autre.

La doublure est elle aussi réalisée par emboutissage d'une tôle d'acier. Elle peut elle aussi être réalisée en une partie supérieure et une partie inférieure qui sont assemblées l'une à l'autre.

Ce renfort de pied milieu et cette doublure sont assemblées l'une à l'autre grâce à des feuillures pour constituer un corps creux.

Dans une zone centrale 20 de ce corps creux, afin de remédier aux inconvénients évoqués plus haut, on dispose le renfort choc de pied milieu 4. Cette zone centrale ne se situe pas nécessairement strictement au milieu de la structure de pied milieu. En fait, elle est de préférence sensiblement centrée sur la section du corps creux (constituée par le renfort de pied milieu et la doublure) présentant la plus faible rigidité. La longueur de ce renfort choc de pied milieu doit être suffisante pour assurer un bon renforcement de cette section de faible rigidité. De préférence, la longueur de renfort choc de pied milieu vaut environ 40 cm.

Le renfort choc de pied milieu est réalisé de préférence par emboutissage d'un flanc de tôle d'acier. L'épaisseur de cette tôle est de préférence de 2 mm et l'acier la constituant est de préférence du type à Très Haute Limite Elastique par exemple HE 660M. Ce renfort choc comprend une première feuillure 6, une deuxième feuillure 5 parallèle à la première et une aile 7, 8, 9 reliant ces deux feuillures.

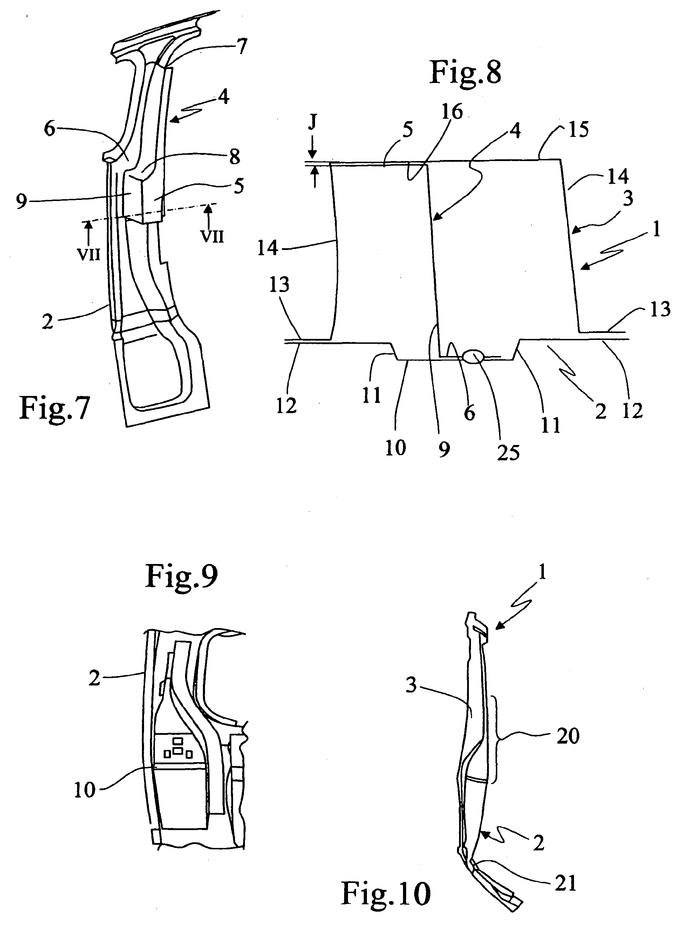

Le renfort choc de pied milieu est destiné à être assemblé au renfort de pied milieu par exemple grâce à des points de soudure 25. Cet assemblage est représenté à la figure 7. Il est réalisé plus précisément entre la première feuillure 6 du renfort choc de pied milieu et le renfort de pied milieu. Une fois la structure de pied milieu assemblée, le renfort choc de pied milieu n'est pas en contact avec la doublure, ces deux éléments étant chacun assemblés de manière indépendante au renfort de pied milieu.

L'aile comprend une première surface plane 7 et une deuxième surface plane 9 décalée. La première surface plane 7 s'étend, une fois le renfort choc de pied milieu assemblé au renfort de pied milieu, sensiblement perpendiculairement au renfort de pied milieu 2 (c'est-à-dire sensiblement selon l'axe Y du véhicule) et longitudinalement relativement à la partie supérieure du renfort choc de pied milieu. La deuxième surface plane 9 s'étend, une fois le renfort choc de pied milieu assemblé au renfort de pied milieu, sensiblement perpendiculairement au renfort de pied milieu 2 (c'est-à-dire sensiblement selon l'axe Y du véhicule) et longitudinalement relativement à la partie inférieure du renfort choc de pied milieu. Les première 7 et deuxième 9 surfaces planes sont raccordées par une surface de raccordement 8. Les deux surfaces planes sont de préférence sensiblement parallèles au plan YZ du véhicule.

Sur la figure 8 représentant une section transversale (c'est-à-dire sensiblement selon un plan XY du véhicule) de la structure de pied milieu, on distingue les formes du renfort de pied milieu et de la doublure. Le renfort présente un embouti 10, 11 entre deux feuillures 12. La doublure présente un fond embouti 15 reliés par deux côtés 14 à des feuillures 13. L'assemblage du renfort de pied milieu et de la doublure est assuré par les feuillures 12 et 13. Quant au renfort choc de pied milieu, sa première feuillure 6 est soudée sur l'embouti 10 du renfort de pied milieu par des points de soudure 25.

On remarque que les dimensions des côtés 14 de la doublure et de l'aile 7, 8, 9 du renfort choc de pied milieu sont telles qu'il existe un jeu J entre le fond 15 de la doublure 3 et la deuxième feuillure 5 du renfort choc de pied milieu. De préférence, ce jeu est inférieur à 4 mm. Cependant, il doit être suffisant pour que, malgré des dispersions défavorables sur les différentes cotes dimensionnelles et géométriques des différentes pièces et de leurs assemblages, l'on puisse assurer, qu'une fois la structure de pied milieu assemblée, le renfort choc de pied milieu n'est pas en contact avec la doublure.

Lors d'un choc latéral exercé sur la structure de pied milieu, le fonctionnement de ce dernier est le suivant. Dans sa section la moins rigide, le fond 15 de la doublure et le renfort de pied ont tendance à se rapprocher l'un de l'autre sous l'effet des contraintes de flexion. Ce phénomène qui tend à faire diminuer la rigidité à la flexion de la structure de pied milieu se poursuit jusqu'à ce que le jeu J soit rattrapé et que le fond 15 arrive au contact de la deuxième feuillure 5 du renfort choc de pied milieu. La deuxième feuillure 5 est alors en appui sur une surface 16 prévu sur le fond de la doublure comme représenté à la figure 9. Le renfort choc de pied milieu constitue alors un obstacle à l'écrasement de la structure. La surface 16 doit être suffisamment étendue et présenter des caractéristiques telles qu'une fois en contact avec la deuxième feuillure, celles-ci ne puissent pas glisser l'une par rapport à l'autre. De cette manière, la rigidité de la structure est augmentée. Le moment d'inertie de la structure de pied milieu se voit multiplié par 3 par rapport à celui d'une structure connue de l'art antérieur. Ainsi, en cas de choc latéral, comme représenté à la figure 10, la structure de pied milieu selon l'invention se déforme principalement à ses extrémités notamment dans une zone inférieure 21, ce qui permet de limiter l'intrusion dans l'habitacle de la structure de pied milieu déformée.

## Revendications

1. Structure de pied milieu (1) pour véhicule automobile comprenant :
- un renfort de pied milieu (2) et une doublure (3) assemblées l'un à l'autre et
- un renfort choc (4) de pied milieu,
où le renfort choc de pied milieu comprend une première feuillure (6) assemblée au renfort de pied milieu et une aile (9) s'étendant au moins sensiblement perpendiculairement au renfort de pied milieu et longitudinalement par rapport à la structure de pied milieu et reliant la première feuillure à une deuxième feuillure (5) au moins sensiblement parallèle à la première, **caractérisée en ce que** l'aile du renfort choc de pied milieu comprend deux surfaces planes (7, 9) au moins sensiblement parallèles raccordées par une surface de raccordement (8).

2. Structure de pied milieu selon la revendication 1, **caractérisée en ce que** la deuxième feuillure est séparée de la doublure par un jeu (J), tel qu'il est rattrapé par déformation de la structure sous l'effet d'un choc latéral.

3. Structure de pied milieu selon la revendication 1, **caractérisée en ce que** la deuxième feuillure est séparée de la doublure par un jeu inférieur à 4 mm.

4. Structure de pied milieu selon l'une des revendications précédentes, **caractérisée en ce que** le renfort choc de pied milieu (25) est réalisé par emboutissage d'un flanc de tôle en acier.

5. Structure de pied milieu selon la revendication précédente, **caractérisée en ce que** l'acier est du type à Très Très Haute Limite Elastique.

6. Véhicule automobile, **caractérisé en ce qu'**il comprend une structure de pied milieu selon l'une des revendications précédentes.

## Claims

1. Centre pillar structure (1) for a motor vehicle, comprising:
- a centre pillar reinforcement (2) and a lining (3) which are fitted together, and
- a centre pillar impact reinforcement (4),
where the centre pillar impact reinforcement comprises a first rebate (6) fitted to the centre pillar reinforcement and a wing (9) extending at least approximately perpendicularly to the centre pillar reinforcement and longitudinally with respect to the centre pillar structure and connecting the first rebate to a second rebate (5) at least approximately parallel to the first, **characterized in that** the wing of the centre pillar impact reinforcement comprises two at least approximately parallel planar surfaces (7, 9) connected by a connecting surface (8).

2. Centre pillar structure according to Claim 1, **characterized in that** the second rebate is separated from the lining by a clearance (J), such that it is taken up by deformation of the structure under the effect of a side impact.

3. Centre pillar structure according to Claim 1, **characterized in that** the second rebate is separated from the lining by a clearance of less than 4 mm.

4. Centre pillar structure according to one of the preceding claims, **characterized in that** the centre pillar impact reinforcement (25) is produced by die-stamping a steel sheet.

5. Centre pillar structure according to the preceding claim, **characterized in that** the steel is of the type having a very, very high elastic limit.

6. Motor vehicle, **characterized in that** it comprises a centre pillar structure according to one of the preceding claims.

## Patentansprüche

1. Mittelsäulenstruktur (1) für Kraftfahrzeug, die umfasst:
- eine Mittelsäulenverstärkung (2) und eine Aufdoppelung (3), die zusammengefügt sind, und
- eine Mittelsäulen-Stoßverstärkung (4),
wobei die Mittelsäulen-Stoßverstärkung einen ersten Falz (6), der mit der Mittelsäulenverstärkung zusammengefügt ist, und einen Flügel (9), der sich zumindest im Wesentlichen senkrecht zu der Mittelsäulenverstärkung und longitudinal in Bezug auf die Mittelsäulenstruktur erstreckt und den ersten Falz mit einem zweiten Falz (5), der zu dem Ersten zumindest im Wesentlichen parallel ist, verbindet, umfasst, **dadurch gekennzeichnet, dass** der Flügel der Mittelsäulen-Stoßverstärkung zwei zumindest im Wesentlichen parallele, ebene Oberflächen (7, 9) aufweist, die durch eine Verbindungsoberfläche (8) verbunden sind.

2. Mittelsäulenstruktur nach Anspruch 1, **dadurch gekennzeichnet, dass** der zweite Falz von der Aufdoppelung durch ein Spiel (J) getrennt ist, das durch Verformung der Struktur unter der Wirkung eines seitlichen Stoßes beseitigt wird.

3. Mittelsäulenstruktur nach Anspruch 1, **dadurch gekennzeichnet, dass** der zweite Falz von der Aufdoppelung durch ein Spiel kleiner als 4 mm getrennt ist.

4. Mittelsäulenstruktur nach einem der vorhergehenden Ansprüche, **dadurch gekennzeichnet, dass** die Mittelsäulen-Stoßverstärkung (25) durch Pressen eines Stahlblechteils hergestellt ist.

5. Mittelsäulenstruktur nach dem vorhergehenden Anspruch, **dadurch gekennzeichnet, dass** der Stahl vom Typ mit sehr sehr hoher Elastizitätsgrenze ist.

6. Kraftfahrzeug, **dadurch gekennzeichnet, dass** es eine Mittelsäulenstruktur nach einem der vorhergehenden Ansprüche umfasst.
